# EUROPEAN PATENT APPLICATION

(11) **EP 4 560 539 A1**
(43) Date of publication of application: **28.05.2025**
(21) Application number: 24214492.1
(22) Date of filing: 21.11.2024
(51) Int. Cl.: G06N 5/01, G06Q 50/06

(54) **METHODS AND SYSTEMS FOR DETERMINING OPERATION AND/OR EFFICIENCY DATA OF AN ENERGY SYSTEM**

(30) Priority: 21.11.2023 GB 202317797
(71) Applicant: Centrica PLC, Windsor, Berkshire SL4 5GD (GB)
(72) Inventor: VETTIGLI, Giuseppe, Windsor, SL4 5GD (GB); BAILEY, Nicholas James, Windsor, SL4 5GD (GB); HAMOUZ, Miroslav, Windsor, SL4 5GD (GB); SUBRAMANIAN, Saran, Windsor, SL4 5GD (GB)
(74) Representative: Matter IP Limited

(57) **Abstract**

Methods and apparatus for determining operation and/or efficiency data of an energy system of a premises, the energy system comprising one or more devices for consuming and/or generating electrical energy, and at least one sensor for generating sensor data indicating electrical energy consumed by and/or generated by the one or more devices and/or context data associated with the premises. The methods and apparatus receive a natural language query from a user, the query corresponding to operation and/or efficiency of the energy system; determine, by a template selection unit and based on the received query, a template of a prompt for submission to a large language model, wherein determining the template comprises selecting, by a trained classification model, at least one template from a plurality of templates, and wherein the determined template comprises a language structure, a data structure and one or more data types, at least one of the one or more data types being derivable from the sensor data and/or the context data; obtain, by a template completion unit, data corresponding to the one or more data types of the determined template; input, by the template completion unit, the obtained data to the determined template based on the data structure to generate a completed prompt for submission to the large language model; submit the completed prompt to the large language model; and generate, by the large language model and based on the completed prompt, data defining the operation and/or efficiency of the energy system.

## Description

### Technical field

The invention relates to methods and systems for determining operation and/or efficiency data of an energy system of a premises. The responses may be generated using data that has been obtained by, or is derived from, sensor data associated with the one or more devices.

### Background

Energy systems within premises are complex, including multiple appliances and devices that are configured to consume and/or generate electrical energy. Operating such energy systems to maximise efficiency is similarly complex and also dependent on contextual factors, such as date and time, weather conditions, geolocation of the premises etc.

Obtaining accurate data relating to the operation and/or efficiency of an energy system is not possible for users of the system and even for energy suppliers due to these complexities and/or a lack of access to relevant data. However, understanding the operation and/or efficiency of an energy system is an important part of managing energy usage in a premises.

Large language models (LLMs) are a type of artificial intelligence (Al) that can understand and generate human language. Typically, LLMs are trained on massive amounts of text data, which allows them to learn patterns and rules of language. This training enables LLMs to perform a variety of tasks, such as generating text, translating languages, summarizing text, answering questions and producing creative content.

In recent years, large language model (LLM) chatbots, such as ChatGPT and Google Bard have seen widespread adoption, despite being at a somewhat experimental stage of development. LLM chatbots such as these are trained to provide responses to prompts provided by users, where the prompts usually correspond to questions or instructions.

The present invention seeks to address or mitigate the above-identified problems, particularly in the context of energy data relating to one or more devices associated with a premises.

### Summary

The inventors have appreciated that an LLM may be used to determine data relating to the operation and/or efficiency of an energy system of a property. The term 'energy system' may include a system having a plurality of devices that are configured to consume energy and/or to generate energy. In order to determine the data, a user prompt submitted to the LLM must have the correct format and include the correct data. For example, incorrect ordering of words in the prompt can result in the LLM generating inaccurate data, despite the semantic meaning of the prompt being unchanged from the user's perspective.

The methods and systems disclosed are directed to solving one or more problems in the prior art, including those disclosed herein. More particularly, the methods and systems disclosed determine and obtain the correct data and data structure for submitting to an LLM in order to generate operation and/or efficiency data relating to an energy system. This enables a user to interact with an LLM to obtain technical data relating to the energy system. In some cases, the operation and/or efficiency data may be used to automatically control one or more appliances in accordance with a determined energy optimisation strategy.

According to the invention in a first aspect, there is provided a method for generating responses to prompts provided by a user to a large language model. The user is associated with a premises comprising one or more devices and at least one sensor for detecting energy consumed by and / or energy generated by at least one of the one or more devices. The method comprises receiving a prompt from a user, the prompt corresponding to a question relating to energy consumption and / or energy generation of the one or more devices; selecting based on the received prompt, a template comprising one or more data fields requiring completion; wherein selecting the template comprises selecting, from a plurality of templates, a template that is determined by a trained classification model as having the highest probability of generating an accurate response from the language model; obtaining a completed version of the selected template, wherein at least one of the data fields of the completed template comprises sensor data generated by the at least one sensor; and providing the completed template to the large language model, and generating based on the completed template, an answer to the received prompt.

In an example, the method further comprises obtaining, based on at least part the selected template, the sensor data and completing at least one of the data fields of the selected template with the obtained sensor data.

In an example, the sensor data comprises energy consumption and / or energy generation data associated with the one or more devices.

In an example, the premises may be associated with a plurality of sensors, and the method may comprise obtaining aggregated sensor data representing data obtained from the plurality of sensors.

In an example, the sensor data corresponds to data obtained from one or more smart devices. The sensor data may comprise data generated by at least of: a smart meter, a smart thermostat, a smart lighting system, a temperature sensor, a sensor associated with an electric vehicle, a smart plug.

In an example, the method may further comprise obtaining, based on the selected template, context information associated with the premises, and completing at least one of the data fields of the selected template with the obtained context information. The context information may comprise one or more of: (i) time and date information, (ii) location information, (iii) a size of the premises, (iv) a number of devices associated with the premises, (v) a type of the one or more devices associated with the premises, (vi) a battery capacity of one or more devices associated with the premises, and (vii) energy tariff information associated with the premises.

In an example, the method may further comprise obtaining, based on the selected template, electric vehicle charging information associated with an electric vehicle, and completing at least one of the data fields with the obtained electric vehicle charging information. The electric vehicle charging information may comprise at least one of: a current charge level of the electric vehicle; a battery capacity of the electric vehicle; and a rate at which power is consumed by the electric vehicle per unit distance.

In an example, the method may further comprise aggregating sensor data from the plurality of sensors and obtaining, based on the selected template, aggregated sensor for completing at least one of the data fields of the selected template. The aggregated sensor data may be stored at one or more servers and obtaining the aggregated sensor data may comprise querying the one or more servers based on the one or more data fields of the selected template.

In an example, the method further comprises controlling at least one of the devices based on the answer generated by the language model. Controlling at least one of the devices may comprise determining a schedule for which at least one of the devices is to be supplied with power and causing the at least one device to be supplied with power in accordance with the determined schedule. The method may also comprise determining at least one energy source from which power will be supplied to the at least one device and causing the at least one device to be supplied with power by the determined energy source.

In an example, determining a schedule for at least one of the devices may comprise determining a first time period for which at least some of the power is to be supplied by a first energy source, and determining a second time period for which at least some of the power is to be supplied by a second energy source, and causing the at least one device to be supplied with power from the respective energy sources in accordance with the determined schedule.

In an example, controlling at least one of the devices may further comprise obtaining energy tariff information associated with premises; and determining, based on the sensor data, a net energy generated by the energy source per unit time. The method may comprise determining an optimal time for supplying power based on at least one of: (i) the energy tariff information and (ii) the determined net energy generated by the energy source per unit time. The sensor data may comprise an amount of energy consumed by the one or more or devices per unit time and an amount of energy generated by the energy source per unit time.

In an example, the at least one energy source associated with the premises comprises a renewable energy source, such as a solar panel.

In an example, at least one of the devices to be controlled comprises a smart device.

In an example, the at least one device that is to be supplied with power for the determined schedule is an electric vehicle charger, and the determined schedule corresponds to a time at which the electric vehicle charger is to provide charging to an electric vehicle.

In an example, the classification model comprises a trained random forest classifier, the random classifier being trained to select a template based on an input user prompt. The random forest classifier may be trained with bag of word features extracted from templates and user prompts and a fitness function comprising a target value.

In an example, the plurality of templates from which the template is selected correspond to a set of templates generated using a genetic algorithm. The genetic algorithm is trained for the large language model (M), with input data comprising: first user prompts (p) representing questions (Q) having answers (A), and second user prompts generated from the first user prompts (r). Training the algorithm comprises determining a set of templates (t) such that when the templates are completed using the second user prompts (r), the answer output by the large language model maximises a fitness score representing the accuracy of the answer output by the model. At least one of the plurality of templates may be generated based on at least one of (i) a combination of at least two templates in the determined set; and (ii) a random mutation of one of the templates in the set. In an example, at least one of the templates may be generated based on a random mutation applied to a combination of at least two templates in the determined set.

In an example, the method may further comprise transmitting, via a communications network, the answer output by the large language model to a user device that is connected to the large language model via the communications network.

According to the invention in a second aspect, there is provided a method for obtaining answers from a large language model in response to prompts provided to it by a user. The user being associated with a premises, the premises comprising one or more devices and at least one sensor for detecting energy consumed by and / or energy generated by at least one of the one or more devices. In this aspect, the method comprises receiving, at a user device, a prompt for providing to the large language model, the prompt relating to the energy consumption and / or energy generation of one or more devices associated with the user's premises; providing the prompt to a trained classifier, the classifier being trained to select, from a plurality of templates, a template that is determined as having the highest probability of generating an accurate answer from the large language model, the template comprising one or more data fields requiring completion; and receiving, at the user device, an answer generated by the large language model, the answer having been generated by the language model based on a completed version of the template, wherein at least one of the data fields of the completed template comprises sensor data generated by the at least one sensor.

In an example, the user device may be connected to the trained classification model via a communications network and providing the prompt to the trained classification model may comprise transmitting the prompt to the trained classification model via the communications network.

In an example, the user device may be connected to the large language model via a communications network and receiving the answer generated by the large language model may comprise receiving, via the communications network, the answer generated by the large language model.

According to the invention in a fourth aspect, there are provided computer program products including computer program code configured, when executed on a computer processor, to control a data processor to undertake the steps of any method described herein.

According to the invention in a fifth aspect, there is provided method for completing templates that are to be provided as an input to a large language model, the large language model being trained to generate answers to prompts provided by a user. The user being associated with a premises comprising one or more devices and at least one sensor for detecting energy consumed by and / or energy generated by at least one of the one or more devices. The method comprising: receiving a template comprising one or more data fields requiring completion, the template having been selected by a classifier trained to select, from a plurality of templates, a template that is determined as having the highest probability of generating an accurate response from the large language model; obtaining, based on the received template, sensor data for completing at least one of the data fields of the received template; completing the received template based on the obtained sensor data; and providing the completed template to a large language model, the large language model being trained to output answers based on input completed templates.

According to the invention in a sixth aspect, there is provided a system for generating responses to prompts provided by a user to a large language model. In this aspect, the system comprises: a template selection unit configured to: receive a user prompt corresponding to a question relating to energy consumption and / or energy generation of one or more devices associated with the user's premises; select based on the received prompt, a template comprising one or more data fields requiring completion. The template selection unit comprises a classification model trained to select a template from a set of templates, wherein the model is trained to determine which of the templates in the set has the highest probability of generating an accurate answer from the large language model. The system also comprises a template completion unit configured to obtain a completed version of the selected template, wherein at least one of the data fields of the completed template comprises data generated by the at least one sensor associated with the one or more devices. The system also comprises a large language model configured to receive the completed template and generate an answer to the user's prompt based on the received completed template.

In an example, the system further comprises a control unit operable to control the one or more devices based on the answer output by the language model. The control unit may be configured to control at least one of (i) a time at and for which the one or more devices are to be supplied with power, (ii) an energy source that is to provide the one or more devices with power, and (iii) an amount of power that is to be supplied to the one or more devices.

In an example, the template completion unit is further configured to obtain, based on the selected template, context information associated with the premises. In an example, the template completion unit is further configured to obtain at least one of: (i) electric vehicle (EV) charging information and (ii) energy tariff information based on the template selected by the template selection unit.

According to the invention in an aspect there is provided a method for determining operation and/or efficiency data of an energy system of a premises, the energy system comprising one or more devices for consuming and/or generating electrical energy, and at least one sensor for generating sensor data indicating electrical energy consumed by and/or generated by the one or more devices and/or context data associated with the premises, the method comprising: receiving a natural language query from a user, the query corresponding to operation and/or efficiency of the energy system; determining, by a template selection unit and based on the received query, a template of a prompt for submission to a large language model, wherein determining the template comprises selecting, by a trained classification model, at least one template from a plurality of templates, and wherein the determined template comprises a language structure, a data structure and one or more data types, at least one of the one or more data types being derivable from the sensor data and/or the context data; obtaining, by a template completion unit, data corresponding to the one or more data types of the determined template; inputting, by the template completion unit, the obtained data to the determined template based on the data structure to generate a completed prompt for submission to the large language model; submitting the completed prompt to the large language model; and generating, by the large language model and based on the completed prompt, data defining the operation and/or efficiency of the energy system.

Optionally, the context information comprises one or more of: (i) time and date information, (ii) location information, (iii) a size of the premises, (iv) a number of devices associated with the premises, (v) a type of the one or more devices associated with the premises, (vi) a battery capacity of one or more devices associated with the premises, and (vii) energy tariff information associated with the premises.

Optionally, the method further comprises aggregating sensor data generated by a plurality of the sensors, wherein obtaining the one or more data types comprises retrieving the aggregated sensor data.

Optionally, the method further comprises determining derived data based on the sensor data, the context data and/or the aggregated data, wherein obtaining the data comprises retrieving the derived data.

Optionally, determining the template comprises generating the plurality of templates based on the query and the large language model, using a genetic algorithm.

Optionally, the genetic algorithm has been trained for the large language model (M), with input data comprising: first user prompts (p) representing questions (Q) having answers (A), and second user prompts (r) that have been generated from the first user prompts, and wherein training the genetic algorithm comprises determining a set of templates (t) based on a fitness score representing an accuracy of the answer (A) output by the large language model when the set of templates are completed using the second user prompts (r).

Optionally, at least one of the plurality of templates has been generated based on at least one of: (i) a combination of at least two templates in the determined set; and (ii) a mutation of at least one of the templates in the determined set.

Optionally, the classification model comprises a trained random forest classifier, the random forest classifier being trained to select a template from the plurality of templates based on the query.

Optionally, the sensor data corresponds to sensor data obtained by at least one of: (i) a smart meter, (ii) a smart thermostat, (iii) a smart lighting system, (iv) a temperature sensor, (v) a sensor associated with an electric vehicle and (vi) a smart plug.

Optionally, the method further comprises controlling at least one of the devices based on the data defining the operation and/or efficiency of the energy system.

Optionally, the method further comprises determining, based on the data defining the operation and/or efficiency of the energy system, a schedule and/or mode of operation of the at least one of the devices, and transmitting a control signal to the at least one of the devices based on the determined schedule and/or mode.

Optionally, the method further comprises determining at least one energy source from which power will be supplied to the at least one of the devices, and causing the at least one device to be supplied with power by the determined energy source.

Optionally, the method further comprises: obtaining energy tariff information; determining, based on the sensor data, a net energy generated by the energy source per unit time; and wherein determining the schedule for which at least one of the devices is to be supplied with power comprises determining an optimal time for supplying power based on at least one of: (i) the energy tariff information and (ii) the determined net energy generated by the energy source per unit time.

According to the invention in an aspect there is provided a computer program product including computer program code configured, when executed on a computer processor, to control a data processor to undertake all or part of the steps of the methods disclosed herein.

According to the invention in an aspect there is provided an apparatus for determining operation and/or efficiency data of an energy system of a premises, the energy system comprising one or more devices for consuming and/or generating electrical energy, and at least one sensor for generating sensor data indicating electrical energy consumed by and/or generated by the one or more devices, the apparatus comprising: a receiver configured to receive a natural language query from a user, the query corresponding to operation and/or efficiency of the energy system; a template selection unit configured to determine, based on the received query, a template of a prompt, wherein the template selection unit is configured to select at least one template from a plurality of templates using a trained classification model, and wherein the determined template comprises a language structure, a data structure and one or more data types, at least one of the one or more data types being derivable from the sensor data and/or context data associated with the premises; a template completion unit configured to obtain data corresponding to the one or more data types of the determined template, wherein the template completion unit is further configured to input the obtained data to the determined template based on the data structure to generate a completed prompt; a large language model configured to receive the completed prompt and to generate, based on the received completed prompt, data defining the operation and/or efficiency of the energy system.

### Brief description of the drawings

Embodiments of the disclosed methods and apparatus will be described in detail below, with reference to the accompanying drawings, in which:
Figure 1 shows an example of a system for determining operation and/or efficiency data for an energy system;
Figure 2 shows an exemplary flowchart of a method for determining operation and/or efficiency data for an energy system;
Figure 3 shows a first example of a template arising from the mixing of two templates in a set;
Figure 4 shows a second example of a template arising from the mixing of two templates in a set;
Figure 5 shows an example of a template arising from a mutation of a template in a set;
Figure 6 shows an example of a selected template;
Figure 7 shows an example of a completed version of the template shown in Figure 6;
Figure 8 shows an example of a system for controlling one or more devices based on operation and/or efficiency data for an energy system; and
Figure 9 shows an example of a completed template.

### Detailed Description

Generally, disclosed herein are methods and systems for determining operation and/or efficiency data of an energy system. In exemplary arrangements, such data is determined based on an output from an LLM based on a prompt. The methods and apparatus disclosed may determine and obtain the data to be submitted to the LLM based on a natural language query by a user. Further, the methods and apparatus disclosed may determine a structure and/or format of a query to be submitted to the LLM based on the determined data and/or the natural language query. The term 'energy' as used herein encompasses and may consist of electrical energy.

Accordingly, the methods and apparatus disclosed can allow access to data relating to the operation of complex energy systems. This in turn allows the energy system to be operated in the most energy efficient manner. The methods and apparatus disclosed ensure a consistent and accurate technical assessment of the energy system without the user having any knowledge of how to interpret raw data relating to the energy system, or even access to that data. The LLM may be used to assist the user with determining the technical performance of the energy system, for example its energy consumption and/or efficiency. Optionally, methods and apparatus may be configured to control one or more devices of the energy system, such as household appliances and electric vehicle chargers, in accordance with the operation and/or efficiency data generated by the language model.

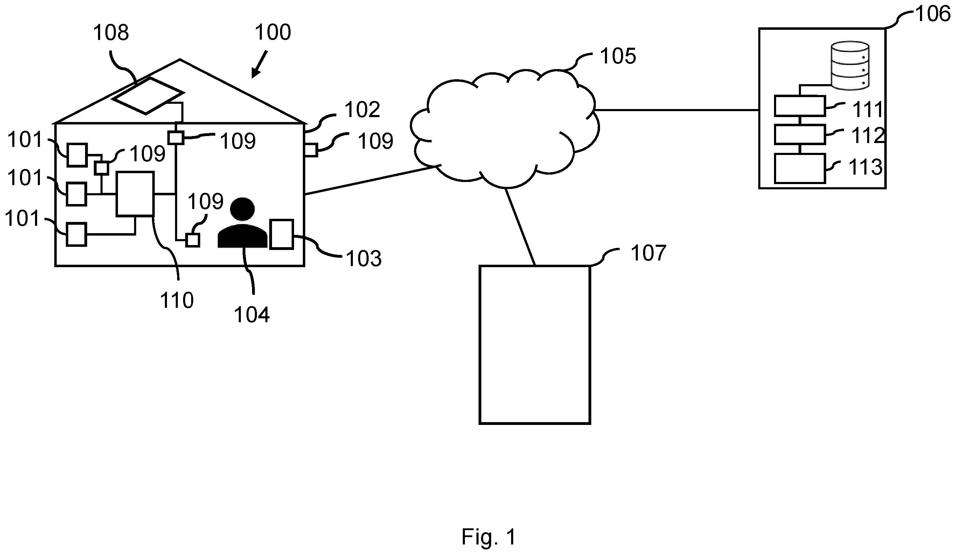

Reference will now be made to Figure 1, which shows an example of a system 100 in accordance with the present disclosure. In Figure 1, the system 100 comprises one or more devices 101 associated with a property 102, a user device 103 associated with a user 104, a communications network 105, a virtual dialogue unit 106, and a remote device 107. The communications network 105 facilitates communication between one or more of the devices 101 associated with the property, the user device 103, the virtual dialogue unit 106 and/or the remote device 107. The communications network 105 may comprise the Internet, for example. The one or more devices 101 may be associated with the property 102 in the sense that they may be located within the property 102 or in a general vicinity of the property 102.

In Figure 1, the property 102 may correspond to a residential premises, and may be associated with and/or contain one or more appliances, such as entertainment appliances (e.g., a TV, computer, games console), lighting appliances (e.g., smart bulbs), heating appliances (e.g., a boiler, HVAC system or heat pump), charging appliances (e.g., plugs or chargers), cooking appliances, washing appliances, drying appliances, etc. That is, the one or more devices 101 associated with the property may correspond to one or more appliances. In some examples, at least some of the appliances 101 are 'smart' appliances in that they are configured to communicate with one or more other devices via a communications network, such as Wi-Fi or Bluetooth.

The one or more appliances 101 may consume energy supplied by one or more energy sources associated with the property 102. For example, the property 102 may be connected to an electrical supply grid, with electrical power being supplied to the one or more appliances 101 via the grid (i.e., as a mains supply). Additionally, or alternatively, the one or more appliances may be powered by one or more alternative or additional energy sources associated with the property 102, such as a distributed energy resource (DER). For example, in Figure 1, the property 102 is shown as having a solar panel 108 installed on its roof. Other examples of distributed energy resources (DERs) include wind turbines, hydroelectric generators, heat pumps, biomass burners, combined heat and power systems, etc. In some examples, at least one of the alternative sources of energy is a source of renewable energy. The alternative or additional energy source may comprise one or more local energy generation devices.

Accordingly, the property 102 comprises an energy system that includes the devices 101 and any DERs, such as the solar panel 108.

The property 102 is also associated with one or more sensors 109. One or more of the sensors 109 may be configured to generate sensor data representing energy consumption and/or energy generation of the devices 101 and/or the DERs (energy data). Optionally, one or more of the sensors may be configured to generate sensor data representing a context associated with the premises 102 (context data). Context data may include non-energy related data that is relevant to the operation and/or efficiency of the energy system, such as temperature data, tariff data, time of day, date, weather data etc. The sensors 109 may enable energy consumption and/or energy generation associated with the property 102 to be tracked (e.g., based on usage of the one or more appliances 101).

In some examples, the sensor data may correspond to data generated by one or more smart devices, such as a smart meter, smart thermostat, a smart lighting system, a smart plug, etc. One or more sensors 109 may be configured to generate sensor data providing an indication of when at least one of the appliances has been switched on or off, the duration for which it was switched on or off, an amount of energy consumed by the appliance (e.g. in kWh), a source that was used to power the appliance, and/or an energy tariff or rate applicable to the time at which the appliance was in use. One or more sensors 109 may be configured to generate sensor data providing internal and/or external temperature.

In some examples, at least one of the devices may receive and optionally aggregate data from one or more of the other devices 101 and/or the sensors 109. For example, in Figure 1, a smart meter 110 is shown as receiving inputs from at least some of the appliances 101 and/or the sensors 109. The smart meter 110 may aggregate the received data and use it to track energy usage of the one or more appliances 101 associated with the premises 102.

It will be appreciated that some of the appliances 101 may contribute to a baseload, i.e., consume a minimum amount of electricity even when not in use (so may be considered to always be 'switched on'). It will also be appreciated that some appliances 101, such as charging appliances, may supply the energy they consume to other devices, such as an electric vehicle that is to be charged.

In some examples, at least one of the sensors 109 may comprise a temperature sensor. The temperature sensor may be configured to measure the temperature inside and/or outside of the property 102. In one example, the operation and/or efficiency data relating to the energy system may identify when the optimal time for heating their home is, which may depend on the difference between the temperature inside and outside of the house (e.g., when natural warming is at its lowest). The temperature sensor data may therefore be used by the LLM to calculate an optimal heating time. The temperature outside of the property 102 may be measured by a corresponding sensor, or obtained from an external data source, such as a remote device that stores context information associated with the property 102, such as location and weather information (described further below).

In some examples, at least one of the sensors 109 may comprise a motion sensor. For example, the LLM may take as an input the presence or absence of a user from the property 102 to determine the operation and/or efficiency data.

In some examples, at least one of the sensors 109 may be associated with an electric vehicle. The sensor data may provide an indication of a current charge level of the electric vehicle. The sensor may be associated with the electric vehicle itself or a separate device that receives charge level information from the electric vehicle (such as the user device 103, which may have an application installed thereat, that allows the user to track the charge level of a vehicle).

The one or more sensors 109 may also detect an amount of energy generated by one or more energy sources associated with the property 102. For example, the solar panel 108 may be associated with a sensor that determines an amount of energy generated by the solar panel 108 per unit time (e.g., in kWh). The LLM 113 may determine operation and/or efficiency data specifying when a maximum amount of energy is being generated by the solar panel 108. This may allow a determination of how efficiently the energy system is being operated based on energy consumption of one or more appliances 101 and this time period. By doing this, the energy system can reduce its impact on the environment, whilst also optimising costs associated with energy usage (by reducing reliance on the mains supply).

In some examples, the energy generated by the one or more energy sources may be detected by a smart meter 110. Alternatively, or in addition, in examples where the property 102 comprises a plurality of energy sources, each or at least some of the energy sources may comprise or be associated with a respective sensor 109.

In some examples, at least one of the sensors 109 may be configured to obtain demand response information from the grid. The demand response information may comprise information such as, whether there is a demand for energy to be supplied to the grid, a duration associated with the demand and a rebate associated with supplying energy to the grid. This type of information may allow the LLM 113 to determine whether surplus energy generated by one or more of the energy sources can be supplied back to the grid, at what price and for how long.

As mentioned previously, in Figure 1, the user 104 is associated with a user device 103. The user device 103 provides the user 104 with a means for providing inputs to the virtual dialogue unit 106. The virtual dialogue unit 106 is configured to generate answers to prompts provided by the user.

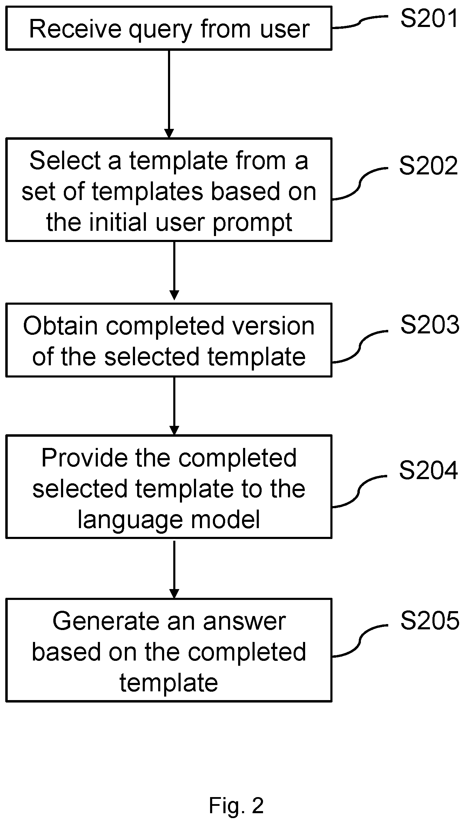

In Figure 1, the virtual dialogue unit 106 is shown as comprising a template selection unit 111 for determining a template, including selecting a template from a set of templates, a template completion unit 112 for completing templates selected by the template selection unit 111, and a large language model (LLM) 113 for generating operation and/or efficiency data based on completed templates input to the language model 113. It will be appreciated that one or more of the elements of the virtual dialogue unit 106 may be located separately from one or more of the other elements. Communication between elements may be over the network 105. The method used for selecting a template, retrieving data, inputting the data to the template, and generating operation and/or efficiency data in response to user queries will be described further in relation to Figure 2.

The virtual dialogue unit 106 may be implemented at one or more servers (such as e.g., a cloud network), with the sensor data (or 'energy data' derived from the sensor data), context data and any other relevant data being obtained from one or more of the remote device 107, the user device 103, or the one or more devices 101 associated with the property. In such a case, the virtual dialogue unit 106 may be configured to transmit the operation and/or efficiency data determined by the LLM 113 to the user device 103, such that it can be displayed at an associated display interface.

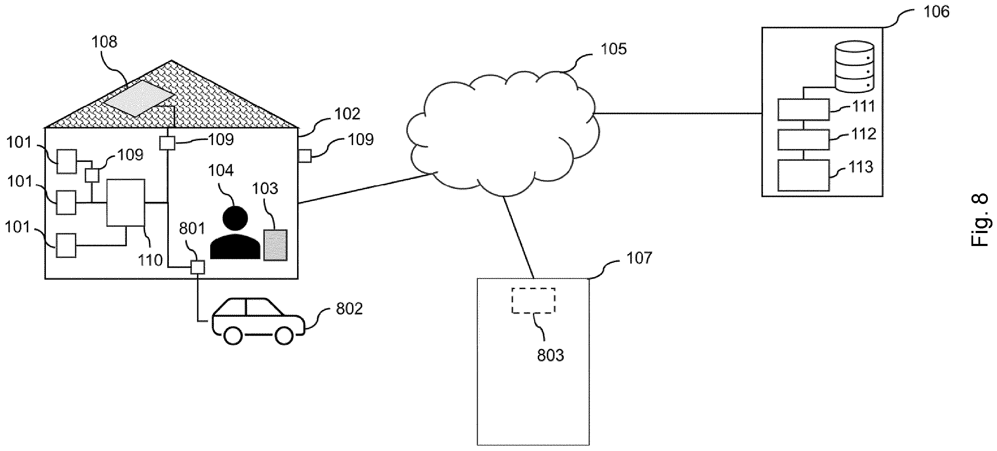

As will be appreciated, it may be difficult for the user 104 to interpret or decipher the potentially large volume of sensor data associated with their premises 102. Indeed, they may not have access to such data. The virtual dialogue unit 106 may therefore improve the intelligibility of the complex sensor data behind the operation of the energy system and provide the user 103 with operation and/or efficiency data for the energy system based on factors relating to energy usage. In some examples, the data output of the virtual dialogue unit 106 may be used to control operation of one or more of the user's appliances 101 (as described later in relation to Figure 8).

The LLM 113 is configured to provide the data in response to prompts, which are based on natural language queries in the form of text, provided by the user 104. The user 104 may input the text via a user application installed at, or accessible via, the user device 103. The user application may be configured to provide these prompts to the virtual dialogue unit 106, via the communications network 105, and to receive, via the communications network 105, the operation and/or efficiency data generated by the LLM 113 of the virtual dialogue unit 106. The received data assesses the performance of the energy system. The user application may then display the received data at a display associated with the user device 103. For example, the user application may display a messaging window at the user device 103, and display the responses provided from the language model as replies to the user's original messages.

In alternative or additional examples, the text provided to the virtual assistant may correspond to text that has been converted from the user's speech. For example, the user application may provide the user with the option of providing speech inputs, which are automatically converted to text and provided to the virtual dialogue unit 106, via the communications network 105. Similarly, the application may allow text outputs generated by the virtual dialogue unit 106 to be converted to speech and output by an audio output associated with the user device 103. Techniques for translating text to speech are well known in the art. Generally, the user device 103 may be configured to convert non-text-inputs (such as detected audio or movement) into text that is subsequently provided to the virtual dialogue unit 106.

Examples of prompts that may be provided by the user include: "At what time does my energy consumption peak?", "At what time does my solar generation peak?", "How much energy is the heat pump consuming?", "Can you tell me what's the baseload and which appliances are causing it?", "How much does my baseload cost?", "How much can I reduce my daily spending by not using the dryer machine?", "When is the best time to charge my EV?", "When is the best time to heat my home?", "When am I in an energy surplus?", etc. The data provided by the virtual dialogue unit 106 may correspond to answers to these questions, with the data being determined based on one or more of: energy consumption data, energy generation data, and context data associated with the property 102 (as will be described further below).

In Figure 1, the remote device 107 is shown as being connected to the communications network 105. The remote device 107 may be configured to obtain sensor data from the one or more sensors 109. For example, the remote device 107 may correspond to a server hosted by the user's energy supplier, with the remote device 107 being configured to aggregate the received sensor data and determine energy consumption and / or energy generation data associated with the property 102 (or more generally, 'energy data'), based on the aggregated sensor data.

The remote device 107 may also store or have access to context data associated with the property 102. The context data may include, for example, a location of the property 102, a size of the property 102, time information (time, date, day, week, month, year, etc.), the number of appliances associated with the property 102, etc. Alternatively, or additionally, the context data may include dynamic data such as weather data (temperature, cloud coverage, humidity, UV level, etc.), local traffic data, sun position data, energy tariff information, electric vehicle information, etc. The context data may be used, at least in part, to determine and/or supplement the operation and/or efficiency data determined by the virtual dialogue unit 106.

In some examples, at least some of the context data may be obtained from a device that is separate from the remote device 107, such as the user device 103. For example, location information may be obtained from the GPS associated with the user device 103. The user application installed at the user device 103 may provide an interface through which some of the context information can be provided directly (e.g., the user may input the size of their property, the model of their electric vehicle, etc. into the application themselves).

In some examples, the functionality of one or more of: the template selection unit 111, template completion unit 112 and language model 113 may be distributed or split between the remote device 107 and the virtual dialogue unit 106. For example, the virtual dialogue unit 106 may be responsible for selecting templates and providing these to the remote device 107, which may complete the templates using the relevant data and provide these to the language model 113 of the virtual dialogue unit 106.

In some examples, one or more of the template selection unit 111, template completion unit 112 and language model 113 may be implemented at the remote device 107 rather than a separate virtual dialogue unit 106.

It will also be appreciated that, in some examples, the user device 103 may also act as a sensor 109 from which sensor data is obtained.

Figure 2 shows a flowchart of an exemplary method for generating operation and/or efficiency data of an energy system in response to queries provided by the user. In preferred examples, the queries relate to questions regarding energy usage and/or generation of the one or more devices 101 associated with the user 104. Here the term 'devices' may refer to the one or more appliances 101 and/or energy sources 108 described previously.

At step S201, an initial query is received from the user 104. The initial query is in natural language form and may correspond to a question that is to be answered by the generation of operation and/or efficiency data by the virtual dialogue unit 106. The query may be relatively basic in that it includes limited information from which an answer can be directly derived. In a simple illustrative example, the query could be "At what time did the solar generation peak?". To answer this question, sensor data must be obtained such as the amount of energy generated by the solar panel over a given time period (e.g., kWh generated each hour over a period of 24 hours).

At step S202, a template is determined based on the received query. This may be done by selecting a template from a plurality of generated templates. Each template comprises one or more data fields requiring completion, such that the user's question can be answered by populating the one or more data fields of the selected template with the relevant data and providing the completed template to the language model 113. Modern language models are particularly sensitive to the type of data presented to them (e.g., how it is aggregated) and how it is formatted, with small variations having a potentially large impact on the accuracy of the data determined by the model. Hence, it is important that an appropriate template is selected, and that the correct data is presented in a manner that is more likely to result in accurate data being generated by the language model. For example, if the language model is presented with an excessive number of data fields and/or irrelevant data fields, the language model is more likely to generate an inaccurate response.

Step S202 comprises selecting from a plurality of templates, a template that is determined as having a higher probability of generating an accurate response from the language model. The plurality of templates may correspond to a set of templates that have been optimised for a specific domain, such as the domain relating to energy consumption and/or energy generation of one or more household devices. Selecting a template from the plurality of templates may comprise selecting a template that is determined as having a highest or maximum probability of generating accurate operation and/or efficiency data from the language model 113.

Determining the template may comprises generating a set of optimised templates using a genetic algorithm, which is a type of optimisation algorithm used in machine learning. The genetic algorithm is trained for the large language model, *M*, with input data comprising initial user queries, *p* , representing questions, *Q*, having answers, *A,* and prompts, *r*, generated from the first user queries, *p*. The optimisation problem may correspond to: given an initial query, *p*, from the user representing a question, *Q*, find a template, *t*, which will generate a prompt, *r* = *t*(*p*)*,* that contains the sensor data and optionally, other information (such as context information), and enables the language model, *M*, to produce the answer *A = M*(*r*)*.*

Finding the optimal template then corresponds to, given a set of questions and answers expressed by an initial user query in natural language *D* = {(*p, Q, A*)} and a language model, *M*, find a set of templates *T* = {*t*} such that *A = M*(*t*(*p*)) maximises a fitness function, *f*(*t*(*p*)*, Q,A*)*,* where *t* is any of the templates in *T.*

The fitness function may be a score of zero or one, or a value therebetween. The fitness score may be assigned by a trainer of the model to reflect the accuracy of the answer generated by the model. Alternatively, the fitness score may be determined based on correct answers provided by a trainer of the model and a ROGUE-L metric which determines a similarity between the correct answers provided by the trainer and the answers output by the model.

It will be appreciated that in some examples, the answer, *A = M*(*r*) may use aggregated sensor data corresponding to relevant energy data, rather than raw sensor data.

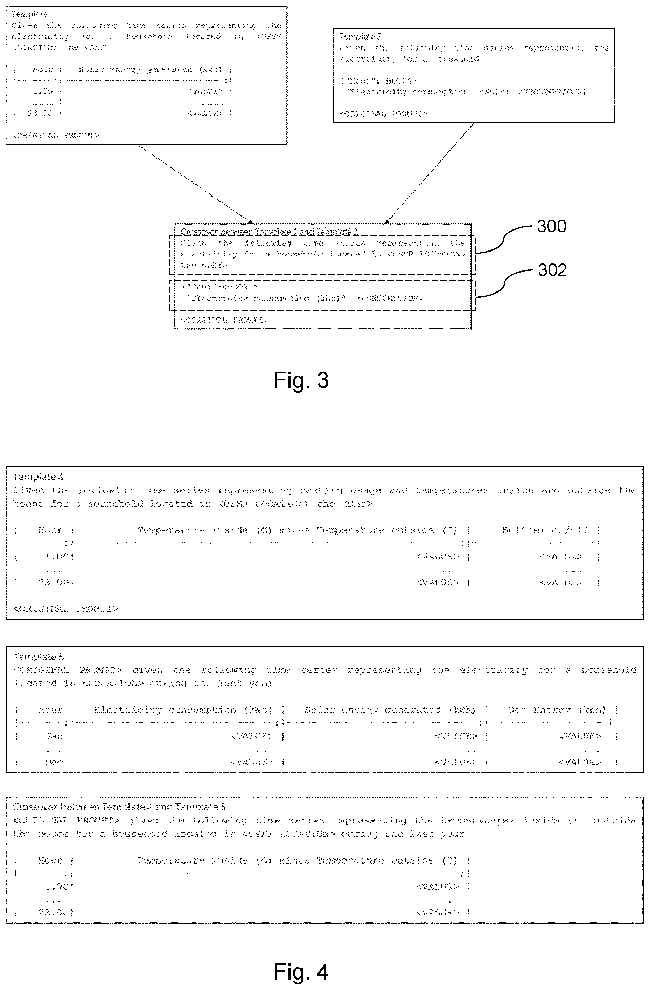

In some examples, at least one of the templates in the optimised set may be generated based on a combination (i.e., mixing) of at least two templates determined as maximising the fitness function. For example, a cross over function may be applied to at least two of the templates obtained from the genetic algorithm. The cross over function may, for example, add at least some of the structure or format from one template to another, or replace part of the structure of one template with that of another. An example of this is shown in Figure 3, which shows a template resulting from the combination of a first and second template. In Figure 3, the template resulting from the combination comprises the first part of the template (e.g., a header section) and the remainder of the second template (e.g., the section for completing with data values and the original prompt).

Figure 4 shows a further example of a template resulting from a cross over function having been applied to two templates. In Figure 4, the part corresponding to the second column of the first template has been combined with the header and first column of the second template, resulting in a template with only two columns: one for hours, and another for temperature inside minus temperature outside. As mentioned previously, the accuracy of the answers generated by the large language model can be improved by providing the large language model with focussed information (i.e., by reducing the opportunities for the language model to use the wrong data when determining an answer).

The mixing of the templates may result in a more accurate answer, where for example, the user's question requires data that is associated with two different templates in the optimised set. Generation of templates in this way allows new templates to be generated from a smaller sub-set of human-generated templates, whilst improving the accuracy of the data determined by the language model.

Accordingly, the template selection unit 111 may use the algorithm (e.g. the genetic algorithm) to determine a template for submitting to the LLM 113 based on a natural language query of the user 104. The determined template may comprise a language structure 300, a data structure 302 and one or more data types. The language structure 300 forms the language used in the determined query. The data structure 302 is the format of the data to be presented in the determined query. The data types are the relevant sensor data (raw or aggregated) obtained from the appliances 101 and/or the sensors 109, as well as the optional context data, which is required to be obtained and added to the determined template. In exemplary arrangements, each data type may have a corresponding data structure 302. The template may be selected from a plurality of templates, or may be generated based on a combination of at least two templates from the plurality of templates.

In additional or alternative examples, determining the template may comprise one or more of the plurality of templates being input to a mutation function that changes the template randomly. The mutation may include one or more of: reformulating the language structure 300 (e.g., the introductory section that sets up the template); and replacing or modifying the data structure 302 and/or data type of the template, e.g., by changing the position of one of the data fields within the template.

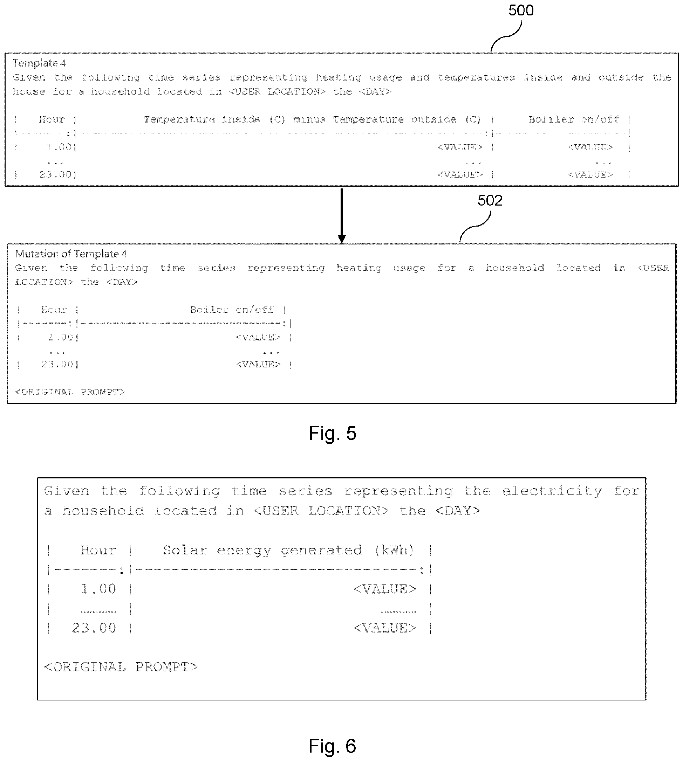

An example of a mutation function having been applied to a template is shown in Figure 5. In Figure 5, an initial template 500, comprising respective column headers for hours, temperature inside minus temperature outside and boiler on/off has been modified such that the modified template 502 includes a language structure that has been re-formulated (e.g., only refers to heating usage, not temperature) and the column for temperature data has been removed.

As mentioned above, the accuracy of the data generated by the large language model may be improved by controlling the format in which data is presented, as well as limiting the specific data that is provided to the large language model.

In some examples, generating the optimised set of templates may comprise mixing at least two templates together (e.g. using a cross over function) and/or applying a mutation function to the template arising from the mixing.

An example of an algorithm for generating a set of templates is provided below.

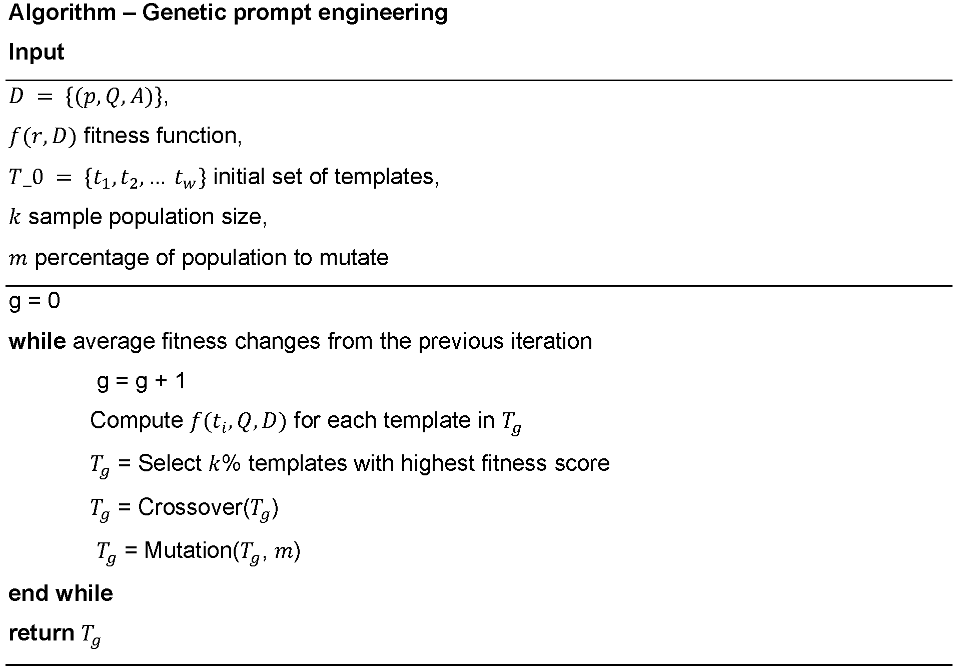

At step S202, determining a template that has a higher probability of generating an accurate response may comprise providing the initial user query to a trained model, such as a trained classification model. The classification model may be trained to select a template from the set of optimised templates that maximises the probability of an accurate answer being generated by the large language model 113. The trained classification model may be a trained random forest classifier, for example, such as that described in Breiman, "Random Forests", Machine Learning 45(1), 5-32, 2001. The Random Forest classifier may be trained using bag of word features extracted from the templates and the prompts and using the fitness function as a target. Bag of word features are a representation of text data where the order of words is disregarded and only the frequency of the words is considered.

An example of a template selected for the query "At what time did the solar generation have a peak?" is shown in Figure 6. In Figure 6, data fields requiring completion are represented using angular brackets. The <USER LOCATION> and <DAY> fields may correspond to context information that is to be obtained and added to the template. The <VALUE> data may correspond to the sensor data obtained from one or more sensors 109 (or aggregated energy data based thereon) that is to be added to the template.

The <ORIGINAL PROMPT> may correspond to the initial prompt provided by the user, i.e. "At what time did the solar generation had a peak?". The original query may be returned to the user so that they can confirm whether the answer provided by the language model corresponds to their question. As can be seen above, the selected template is a prompt, derived from the user query and that can be completed with the relevant data and submitted to the LLM 113.

Returning to Figure 2, at step S203, the template completion unit 112 obtains the data required to generate a completed version of the template selected at step S202, based on the one or more data types of the determined template. That is, the template completion unit 112 may receive the one or more data types of the determined template and may obtain the data corresponding to those data types. The data obtained may comprise sensor data, context data or any data derivable therefrom.

The completed version of the determined template corresponds to the selected template with sensor and/or context data (or data derived therefrom) input to at least one of the data fields. The sensor data may correspond to sensor data generated by the one or more sensors 109 described previously or data derived therefrom (e.g., aggregated sensor data, or 'energy data' pertaining to energy consumption and/or generation by the one or more devices 101). In some examples, the template completion unit 112 may obtain the data needed to complete the selected template from the remote device 107.

In some examples, step S203 comprises obtaining relevant data based on the selected template (or part thereof). In some examples, the relevant data may comprise (or is based on) time-series data that indicates for a given time period, such as e.g., a day, an amount of energy consumed and/or generated (e.g., in kWh) by the one or more devices, per unit time (e.g., hourly). Obtaining the relevant data may comprise querying one or more servers at which the relevant data is stored, using at least some of the information in the selected template (e.g. a data field, a data field header, etc.).

The determined template may then be completed by the template completion unit112 inputting the obtained data into the template according to the data structure of the determined template.

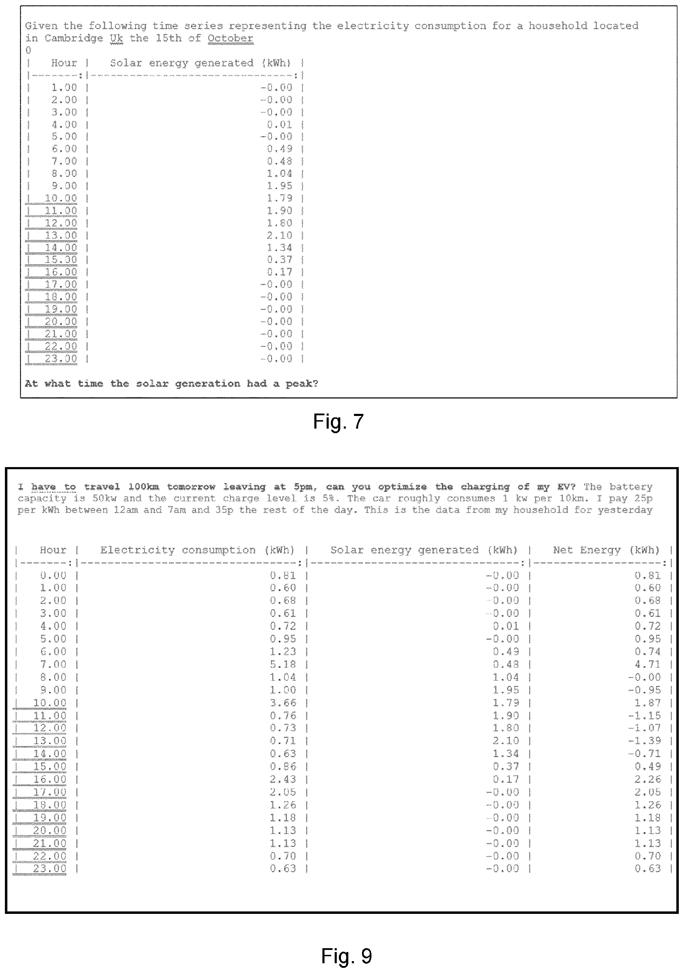

Figure 7 shows an example of a completed version of the template shown in Figure 6. In this example, the sensor data used to complete the template corresponds to an amount of energy generated by the solar panel each hour over a previous day. The context information corresponds to a location of a property (premises) and a current date.

At step S204, the completed template is provided to the language model. The language structure, data structure and one or more data types allow for the most accurate data to be generated by the language model and provide for consistent operation and/or efficiency data relating to the energy system.

At step S205, the language model 113 generates the operation and/or efficiency data based on the completed template (e.g. as shown in Fig. 7). An example of the operation and/or efficiency data output by the language model for the prompt "At what time did the solar generation had a peak?" may include:
*"The peak of solar generation in your data is 2.10 kWh, which occurred at 1pm. This is the time of solar noon, when the sun is at its highest point in the sky and the solar panels are receiving the most sunlight."*

It is noted that the example provided above is simplistic in nature as this aids description of the methods and apparatus disclosed. An advantage of the methods and apparatus disclosed is that a user can gain insights into the operation and efficiency of the energy system without any technical knowledge or access to raw sensor and/or context data.

Other more complex examples may derive operation and/or efficiency data based on multiple sets of sensor data and/or context data. Accordingly, a user query may result in a determined template having a plurality of data types, each of which may be sensor data, context data and/or data derived from sensor data and/or context data. The language model 113 may determine new data, representing the operation and/or efficiency data, and that is based on the plurality of data types, e.g. a combination or a calculation.

In some examples, the method may further comprise an additional step (not shown), of transmitting the operation and/or efficiency data generated by the language model to another device. For example, the operation and/or efficiency data generated at step S205 may be transmitted, via the communications network 105, to the user device 103 for display. As mentioned previously, the user 104 may have an application installed at their device 103 that enables outputs of the language model to be displayed as part of a messaging interface.

Additionally, or alternatively, the method may further comprise generating, based on the operation and/or efficiency data generated by the language model, control instructions for controlling operation of one or more of the devices associated with the user's premises. The control instructions may be transmitted to a control unit that is configured to control operation of the one or more devices. Alternatively, the control instructions may be transmitted directly to one or more of the devices. The control unit and/or the one or more devices may comprise one or more processors, which responsive to receiving control instructions, modify operation of the one or more devices. For example, if the operation and/or efficiency data indicates that a device/appliance is operating inefficiently (e.g. by having sub optimal settings, or operating at the wrong time(s)), the control unit may issue instructions to alter the settings and/or operation time of the device/appliance). An example of controlling one or more devices based on the output of the language model will be described further in relation to Figure 8.

It will be appreciated that, in some examples, the method may comprise, prior to completing the one or more data fields of the determined template, transforming the obtained sensor data (or energy data) so that is in a suitable format for the determined template. Transforming the obtained sensor data may comprise performing one or more operations on the data and/or combining it with other information, such as context information. Transformation of the data may be performed at, for example, the remote device, prior to supplying the relevant data to the template completion unit 112.

For example, a user query such as "when is the best time to charge my electric vehicle (EV)?" may result in the determination, for a given time period (e.g., a day), of a net energy per unit time associated with the user's property. The net energy may correspond to the energy generated by an energy source, such as a solar panel, minus the electricity consumption associated with user's property. The net energy may be used to determine a suitable time (e.g., hour of the day) where all or most of the charging can be supplied by the energy source (e.g., solar panel 108).

In another example, a query relating to heating usage, such as when a boiler or heat pump was switched on or off, may result in the determination, for a given time period (e.g., day), of an average difference between the internal and external temperature of the property per unit time. For example, if the on/off state of the boiler is not measured directly by a dedicated sensor, it may be possible to infer usage based on e.g., the average difference in internal and external temperature per unit time (e.g., hourly) and the total electricity consumption per unit time (e.g., kWh) associated with the premises. The boiler may be inferred as having been switched on at time when there was a peak in electricity consumption and a maximum average difference between the internal and external temperature.

In other examples, transforming the sensor data (or energy data) may include determining a minimum and/or maximum energy consumption and/or energy generation for a given period (e.g., a day).

In some examples, transforming the sensor data may involve determining an amount of energy that is likely to be consumed if a certain appliance is not used. For example, a prompt in the form of "How much can I reduce my daily spending by not using the dryer machine?" may require obtaining time-series data corresponding to electricity consumed each hour over a day (e.g., kWh consumed each hour), and determining from this, a difference in the energy that would be consumed over the day if the dryer was not used. Answering this specific question may also require obtaining additional information such as when the dryer was used, the amount of energy it consumed or likely consumes (e.g., based on a known model), and an energy tariff (e.g., pennies or cents charged per kWh) associated with the user's property. At least some of this information may correspond to context information.

In some examples, transforming the sensor data may involve resampling and/or re-aligning the sensor data. For example, a smart meter may measure electricity consumption every half hour but answering the user's question may require completing the selected template with hourly electricity consumption data.

Figure 8 shows an example of a further system 800 in accordance with the present disclosure. The system 800 shown in Figure 8 is similar to that shown in Figure 1 but shows at least one of the devices associated with the property 102 as comprising an electric vehicle (EV) charger 801 and an electric vehicle 802 for receiving charging from the electric vehicle charger 801. The energy system of Fig. 8 comprises an EV charger

In Figure 8, the data generated by the language model 113 is used to schedule charging of the electric vehicle 802 by the EV charger 801. For example, the user 104 may wish to plan a trip with their electric vehicle 802 a day in advance and may provide the following prompt to the virtual dialogue unit 106: "I have to travel 100km tomorrow leaving at 5pm, can you optimize the charging of my EV?".

A template is determined by the template selection unit 111, as described previously. The determined template is completed by the template completion unit 112, as described above. Completion of the determined template comprises obtaining the data type(s) of the determined template and inputting them into the determined template. In this example, the data types include the total electricity consumption determined for the property 102 over a given time period (e.g., kWh consumed each hour, over a day). The data types also comprise an amount of electricity generated per unit time by the solar panel (e.g., kWh generated each hour, over the same day). The template completion unit 112 may be configured to obtain these data types from the remote device 107. A further data type of the determined template comprises net energy generated for the time period (e.g. the day) and this may be determined by the template completion unit 112 based on the total electricity consumption and the amount of electricity generated per unit time by the solar panel. The obtained data types are input into the determined template.

In addition, a further data type of the determined template includes energy tariff information associated with the user's property 102. This data type is also obtained and input to the template. In some examples, the energy tariff information may correspond to sensor data obtained from the one or more sensors. For example, a smart meter may track the price a user will be charged for their energy usage depending on the time of day. In additional or alternative examples, the energy tariff information may correspond to context information that is obtained from the user's energy supplier, rather than from one or more sensors located at or in the vicinity of the user's property.

In the example of Figure 8, a further data type of the determined template includes EV charging information associated with the electric vehicle 802, and this is also obtained and input to the determined template. The EV charging information may include at least one of: a current charge level of the electric vehicle, a battery capacity of the electric vehicle, and a rate at which energy is consumed by the EV per unit distance (e.g., kW per km).

As mentioned previously, obtaining the relevant data for completing the one or more data fields of the selected template may be performed by a template completion unit 112, which may be located at the virtual dialogue unit 106 (as shown in Figure 8) or the remote device 107.

In some examples, the EV charging information is stored at a database associated with the remote device 107, such that the template completion unit 112 can obtain the relevant EV data by querying the database. The database may comprise EV charging information for one or more EVs associated with one or more users. For example, the instance of the application installed at the user's device may be associated with a unique ID (such as a username), with the relevant EV information being obtained by performing a look-up operation in the database using the user's unique ID.

In additional or alternative examples, at least some of the EV charging information may be obtained from a separate device, such as the user device 103, or a smart meter. For example, the user may have an EV application installed on their device 103, from which relevant EV charging information can be retrieved by the template completion unit 112.

Having obtained the energy data, energy tariff information and EV charging information, the completed template is provided to the large language model 113. An example of a completed template for the present example is shown in Figure 9. In Figure 9, the completed template comprises an introductory section (the language structure) that provides context for the energy data introduced by the columns corresponding to hour, electricity consumption (kWh), solar energy generated (kWh) and net energy (kWh).

For the completed template shown in Figure 9, the data generated by the language model 113 may comprise a charging schedule determined by the language model 113 and based on the sensor and/or context data specific to the energy system. For example:
*"Based on your solar generation data from yesterday, you should be able to generate enough solar energy to charge your EV to 80% during the day, tomorrow. However, it is always best to err on the side of caution and start charging your EV as early as possible in the morning.*

### Here is a suggested charging schedule for tomorrow:

- *Start charging your EV at 12am, when the electricity price is 25p per kWh.*
- *Charge your EV to 80% by 6am.*
- *Stop charging your EV at 6am and rely on solar energy to power your EV for the rest of the day."*

The charging schedule provided by the language model 113 may optionally then be translated into a structured format, corresponding to a set of control instructions. The control instructions may include, for example: a time at which charging is to commence, a time at which charging is to cease, a target charge level, and a source of energy that is to be used to provide the charging. The control instructions may include options for charging such that the EV 802 is only charged at night and / or when there's a surplus of energy generated by the solar panel 108.

An example of a set of control instructions generated from the answer output by the language model 113 is:

```
 {
 "start_time": "2023-09-29T00:00:00Z",
 "end_time": "2023-09-29T06:00:00Z",
 "target_charge_level": 80,
 "only_solar": False
       }
       {
 "start_time": "2023-09-29T06:00:00Z",
 "end_time": "2023-09-29T17:00:00Z",
 "target_charge_level": 80,
 "only_solar": True
 }
```

These control instructions may be provided to a control unit 803 that is operable to control at least the EV charger 801 and the solar panel 108 based on the received control instructions.

It will be appreciated that Figure 8 provides an illustrative example of controlling an EV charger 801 and a solar panel 108 based on the output of the language model 113. More generally, the output of the language model 113 may be used to control any of the one or more devices associated with the property 102. For example, the output of the language model 113 may be used to schedule operation of a boiler or heat pump, to schedule operation of a lighting system, to schedule operation of a washing appliance, etc. The output of the language model 113 may also be used to control a source from which power is supplied to one or more of these devices for at least some of the time that they are scheduled to be supplied with power.

Generally, the control instructions may be generated by extracting relevant information from the output of the language model 113 and translating it into a format that can be used to control the one or more devices. The control instructions may be generated by the language model 113 or a separate device that receives outputs from the language model 113. For example, the remote device 107 may be configured to receive outputs from the language model 113, via the communications network 105, and to convert these into a suitable format for a control unit 803 that controls operation of the one or more devices.

As mentioned previously, the devices may be controllable by virtue of being smart devices (or loT devices), such as smart thermostats, smart plugs, smart lights, smart locks, smart blinds, smart doors, smart sprinkler systems, smart pet feeders, smart security cameras, smart air conditioners, smart ovens, smart vacuums, smart faucets, etc. These devices may be controllable by virtue of being connected to a communications network, such as WiFi network, which enables the one or more devices to receive control instructions/commands.

In some examples, at least some of the devices may comprise or be associated with one or more actuators and control of the one or more devices may correspond to controlling operation of the one or more associated actuators. For example, control of at least one of the devices may correspond to adjusting the position of a valve, such as a smart radiator valve. Other examples of smart devices comprising valves include smart sprinkler systems, smart drip irrigation systems, smart HVAC systems, etc.

Generally, controlling the one or more devices may comprise one or more of:
i. scheduling a time for which at least one of the devices is to be supplied with power, which may include one or more of: a start time, an end time, and a duration;
ii. determining an amount of power that is to be supplied to the one or more devices;
iii. determining a source of energy that is to supply the one or more devices with power;

In some examples, control of the one or more devices 101 may be performed centrally via a control unit, or directly (no control unit), distributed between plural control units, and/or a combination of direct communication and communication via one or more control units.

In some examples, one or more of the devices 101, user device 103, virtual dialogue unit 106 and remote device 107 may comprise the control unit. For example, the user may have an application installed at their device 103 that allows them to control one or more of their smart devices. Alternatively, or in addition, the premises 102 may be associated with a control unit (a local control unit), such as a hub device that issues commands to the one or more devices that are to be controlled. The hub device may use one or more of: WiFi, Zigbee, Z-Wave, Lutron Caseta to communicate with the one or more devices. The hub may receive the control instructions from e.g., the remote device.

A computer program may be configured to provide any of the above-described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random-access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

It will be apparent to those skilled in the art that various modifications and variations can be made to the disclosed systems and methods. Other embodiments will be apparent to those skilled in the art from consideration of the specification and practice of the disclosed systems and methods. It is intended that the specification and examples be considered as exemplary only, with a true scope being indicated by the following claims and their equivalents.

## Claims

1. A method for determining operation and/or efficiency data of an energy system of a premises, the energy system comprising one or more devices for consuming and/or generating electrical energy, and at least one sensor for generating sensor data indicating electrical energy consumed by and/or generated by the one or more devices and/or context data associated with the premises, the method comprising:
receiving a natural language query from a user, the query corresponding to operation and/or efficiency of the energy system;
determining, by a template selection unit and based on the received query, a template of a prompt for submission to a large language model,
wherein determining the template comprises selecting, by a trained classification model, at least one template from a plurality of templates,
and wherein the determined template comprises a language structure, a data structure and one or more data types, at least one of the one or more data types being derivable from the sensor data and/or the context data;
obtaining, by a template completion unit, data corresponding to the one or more data types of the determined template;
inputting, by the template completion unit, the obtained data to the determined template based on the data structure to generate a completed prompt for submission to the large language model;
submitting the completed prompt to the large language model; and
generating, by the large language model and based on the completed prompt, data defining the operation and/or efficiency of the energy system.

2. The method according to claim 1, wherein the context information comprises one or more of: (i) time and date information, (ii) location information, (iii) a size of the premises, (iv) a number of devices associated with the premises, (v) a type of the one or more devices associated with the premises, (vi) a battery capacity of one or more devices associated with the premises, and (vii) energy tariff information associated with the premises.

3. The method according to any preceding claim, further comprising aggregating sensor data generated by a plurality of the sensors, wherein obtaining the one or more data types comprises retrieving the aggregated sensor data.

4. The method according to any preceding claim, further comprising determining derived data based on the sensor data, the context data and/or the aggregated data, wherein obtaining the data comprises retrieving the derived data.

5. The method according to any preceding claim, wherein determining the template comprises generating the plurality of templates based on the query and the large language model, using a genetic algorithm.

6. The method according claim 5, wherein the genetic algorithm has been trained for the large language model (M), with input data comprising: first user prompts (p) representing questions (Q) having answers (A), and second user prompts (r) that have been generated from the first user prompts,
and wherein training the genetic algorithm comprises determining a set of templates (t) based on a fitness score representing an accuracy of the answer (A) output by the large language model when the set of templates are completed using the second user prompts (r).

7. The method according to claim 6, wherein at least one of the plurality of templates has been generated based on at least one of: (i) a combination of at least two templates in the determined set; and (ii) a mutation of at least one of the templates in the determined set.

8. The method according to any preceding claim, wherein the classification model comprises a trained random forest classifier, the random forest classifier being trained to select a template from the plurality of templates based on the query.

9. The method according to any preceding claim, wherein the sensor data corresponds to sensor data obtained by at least one of: (i) a smart meter, (ii) a smart thermostat, (iii) a smart lighting system, (iv) a temperature sensor, (v) a sensor associated with an electric vehicle and (vi) a smart plug.

10. The method according to any preceding claim, further comprising controlling at least one of the devices based on the data defining the operation and/or efficiency of the energy system.

11. A method according to claim 10, comprising determining, based on the data defining the operation and/or efficiency of the energy system, a schedule and/or mode of operation of the at least one of the devices,
and transmitting a control signal to the at least one of the devices based on the determined schedule and/or mode.

12. A method according to claim 10 or 11, comprising determining at least one energy source from which power will be supplied to the at least one of the devices,
and causing the at least one device to be supplied with power by the determined energy source.

13. A method according to claim 12, further comprising:
obtaining energy tariff information;
determining, based on the sensor data, a net energy generated by the energy source per unit time; and
wherein determining the schedule for which at least one of the devices is to be supplied with power comprises determining an optimal time for supplying power based on at least one of: (i) the energy tariff information and (ii) the determined net energy generated by the energy source per unit time.

14. A computer program product including computer program code configured, when executed on a computer processor, to control a data processor to undertake the steps of the method of claims 1 to 13.

15. An apparatus for determining operation and/or efficiency data of an energy system of a premises, the energy system comprising one or more devices for consuming and/or generating electrical energy, and at least one sensor for generating sensor data indicating electrical energy consumed by and/or generated by the one or more devices, the apparatus comprising:
a receiver configured to receive a natural language query from a user, the query corresponding to operation and/or efficiency of the energy system;
a template selection unit configured to determine, based on the received query, a template of a prompt,
wherein the template selection unit is configured to select at least one template from a plurality of templates using a trained classification model,
and wherein the determined template comprises a language structure, a data structure and one or more data types, at least one of the one or more data types being derivable from the sensor data and/or context data associated with the premises;
a template completion unit configured to obtain data corresponding to the one or more data types of the determined template,
wherein the template completion unit is further configured to input the obtained data to the determined template based on the data structure to generate a completed prompt;
a large language model configured to receive the completed prompt and to generate, based on the received completed prompt, data defining the operation and/or efficiency of the energy system.
